# EUROPÄISCHE PATENTANMELDUNG

(11) **EP 4 353 486 A2**
(43) Veröffentlichungstag der Anmeldung: **17.04.2024**
(21) Anmeldenummer: 23020460.4
(22) Anmeldetag: 05.10.2023
(51) Int. Cl.: B42D 25/324, B42D 25/351, B42D 25/373, B42D 25/425, B42D 25/45, G02B 5/18

(54) **SICHERHEITSELEMENT MIT LICHTBRECHENDEN STRUKTUREN UND FARBWECHSEL**

(30) Priorität: 06.10.2022 DE 102022125862
(71) Anmelder: Giesecke+Devrient Currency Technology GmbH, 81677 München (DE)
(72) Erfinder: Hoffmüller, Winfried, 83703 Gmund am Tegernsee (DE); Pfeiffer, Matthias, 81677 München (DE); Huber, Alexander, 83703 Gmund am Tegernsee (DE); Fuhse, Christian, 83703 Gmund am Tegernsee (DE); Rahm, Michael, 83703 Gmund am Tegernsee (DE); Heim, Manfred, 83703 Gmund am Tegernsee (DE)
(74) Vertreter: Giesecke+Devrient IP

(57) **Zusammenfassung**

Die Erfindung betrifft ein Sicherheitselement für Sicherheitspapiere, Wertdokumente oder dergleichen, wobei das Sicherheitselement aus einem Substrat mit einer Vorderseite und einer Rückseite besteht, wobei auf der Vorderseite des Substrats ein Prägelack mit einer dem Substrat zugewendeten Rückseite und einer vom Substrat abgewendeten Vorderseite angeordnet ist, wobei in die Vorderseite des Prägelacks eine lichtbrechende Struktur eingebracht ist.

Erfindungsgemäß ist die mindestens teilreflektierende Schicht auf der Rückseite des Substrats angeordnet, wobei die Farbschicht zwischen der Rückseite des Substrats und der reflektierenden Schicht angeordnet ist. Gemäß einer alternativen Ausgestaltung der Erfindung ist die Farbschicht zwischen der Vorderseite des Substrats und dem Prägelack angeordnet, wobei die mindestens teilreflektierende Schicht auf der Rückseite des Substrats angeordnet ist. Gemäß einer weiteren alternativen Ausgestaltung der Erfindung ist die Farbschicht zwischen der Vorderseite des Substrats und dem Prägelack angeordnet, wobei die mindestens teilreflektierende Schicht zwischen der Farbschicht und der Vorderseite des Substrats angeordnet ist.

## Beschreibung

Die Erfindung betrifft ein Sicherheitselement für Sicherheitspapiere, Wertdokumente oder dergleichen, wobei das Sicherheitselement aus einem Substrat mit einer Vorderseite und einer Rückseite besteht, wobei auf der Vorderseite des Substrats ein Prägelack mit einer dem Substrat zugewendeten Rückseite und einer vom Substrat abgewendeten Vorderseite angeordnet ist, wobei in die Vorderseite des Prägelacks eine lichtbrechende Struktur eingebracht ist.

Hierzu ist beispielsweise aus EP 2 946 940 A1 ein Sicherheitselement bekannt, das eine Schicht aus farbverschiebendem Material und zumindest teilweise über einer ersten Oberfläche der farbverschiebenden Schicht eine Lichtsteuerschicht mit einer Oberflächenstruktur umfasst, die den Winkel des Lichts modifiziert, das von dem Sicherheitselement reflektiert wird. Die Lichtsteuerschicht umfasst zwei oder mehr parallele Anordnungen von lichtbrechenden Strukturen, wobei die Längsachsen einer Anordnung winkelmä-βig von denen der anderen Anordnung versetzt sind.

Nachteilig ist hierbei insbesondere, dass der Farbwechsel der farbverschiebenden Schicht nur gering in Erscheinung tritt. Des Weiteren ist die Anzahl der verschiedenen Farbwechsel von farbverschiebenden Schichten begrenzt, da nur wenige verschiedene Farbwechsel dargestellt werden können. Zusätzlich ist eine farbverschiebenden Schicht, die aus Flüssigkristallen oder Dünnfilm-Interferenzschicht-Pigmenten besteht, teuer. Des Weiteren kann eine farbverschiebende Schicht aus Flüssigkristallen prinzipiell maximal die Hälfte des einfallenden Lichts reflektieren, so dass der gewünschte Effekt im Vergleich zur Reflexion direkt an der Oberfläche des Sicherheitselements eingeschränkt ist.

Der Erfindung liegt deshalb die Aufgabe zugrunde, ein gattungsgemäßes Sicherheitselement derart weiterzubilden, dass die Nachteile des Standes der Technik behoben werden und der Schutz gegenüber Fälschungen weiter erhöht wird.

Diese Aufgabe wird durch die Merkmale der unabhängigen Ansprüche gelöst. Weiterbildungen der Erfindung sind Gegenstand der abhängigen Ansprüche.

Erfindungsgemäß ist die mindestens teilreflektierende Schicht auf der Rückseite des Substrats angeordnet, wobei die Farbschicht zwischen der Rückseite des Substrats und der reflektierenden Schicht angeordnet ist.

Gemäß einer alternativen Ausgestaltung der Erfindung ist die Farbschicht zwischen der Vorderseite des Substrats und dem Prägelack angeordnet, wobei die mindestens teilreflektierende Schicht auf der Rückseite des Substrats angeordnet ist.

Gemäß einer weiteren alternativen Ausgestaltung der Erfindung ist die Farbschicht zwischen der Vorderseite des Substrats und dem Prägelack angeordnet, wobei die mindestens teilreflektierende Schicht zwischen der Farbschicht und der Vorderseite des Substrats angeordnet ist.

Gemäß allen drei Alternativen der Erfindung ist somit in Blickrichtung eines Betrachters auf die Vorderseite des Substrats unterhalb des Prägelacks eine Farbschicht und unterhalb der Farbschicht wiederum eine mindestens teilreflektierende Schicht angeordnet. Für die Anordnung der Farbschicht und der mindestens teilreflektierenden Schicht in Bezug auf das Substrat und den Prägelack gibt es die drei vorgenannten verschiedene alternative Möglichkeiten gemäß den unabhängigen Ansprüchen 1 bis 3.

Die folgenden bevorzugten Ausführungsformen beziehen sich auf alle drei Alternativen der Erfindung gleichermaßen und können jeweils für sich oder in Kombination miteinander verwendet werden.

Gemäß einer bevorzugten Ausführungsform ist vorgesehen, dass die lichtbrechende Struktur aus Prismen, sägezahnartigen Strukturen oder Fresnellinsen besteht.

Bei den Prismen handelt es sich bevorzugt um Mikroprismen mit Abmessungen unterhalb der Auflösungsgrenze des menschlichen Auges, also kleiner als 100 µm, bevorzugt kleiner als 50 µm in der Ebene des Sicherheitselements. Die Höhe der Mikroprismen liegt unterhalb von 20 µm, bevorzugt unterhalb von 10 µm, besonders bevorzugt im Bereich von 5 µm oder kleiner. Die Umrissformen der Prismen können beliebig sein, wobei ein rechteckiger Umriss bevorzugt ist. Die Orientierung der Prismen ergibt sich aus der Neigung relativ zu der die Ebene des Sicherheitsmerkmals aufspannenden x- und y-Achse und ist für die durch Lichtbrechung an den Prismen hervorgerufene Ablenkung des Lichts mitbestimmend. Die Prismen können aperiodisch, quasiperiodisch oder regelmäßig angeordnet sein.

Eine weitere Ausgestaltung der lichtbrechenden Struktur besteht in sägezahnartigen Strukturen, die in ähnlicher Weise wirken wie die Prismen. Typischerweise beträgt die Periode der Sägezahnstrukturen Werte zwischen 100 µm und 3 µm und bevorzugt zwischen 30 µm und 5 µm, wobei die Periode über einen Flächenbereich konstant oder auch veränderlich sein kann. Da die Ausdehnung der Sägezähne in Richtung ihres größten Gradienten, also parallel zur Richtung ihrer periodischen Veränderung, typischerweise unterhalb der Auflösungsgrenze des menschlichen Auges liegt, kann die Ausdehnung der Sagezähne in einer Richtung senkrecht dazu, also entlang der Sägezähne, auch Werte oberhalb des Auflösungsvermögens annehmen, zum Beispiel Werte im Bereich von 5 µm und einige Millimetern.

Ein weiteres Beispiel für lichtbrechende Strukturen wird von Fresnellinsen und allgemeiner von Strukturen, die durch eine Fresnelkonstruktion definiert werden, dargestellt. Mit solchen Strukturen lassen sich gewölbte Oberflächen besonders gut imitieren.

Denkbar, wenngleich nicht bevorzugt, sind lichtbrechende Strukturen, bei denen der Brechungsindex lateral moduliert wird, beispielswese indem ein Material mit gegebenem Brechungsindex lateral variierend mit Nanostrukturen unterschiedlicher Dichte und / oder Tiefe versehen wird.

Gemäß einer weiteren bevorzugten Ausführungsform ist vorgesehen, dass in die lichtbrechende Struktur mindestens teilweise eine Mattstruktur eingebracht ist. Die Mattstruktur reduziert oder unterdrückt besonders bevorzugt ungewollte oder störende Licht-Reflexe, indem sie die lichtbrechende Struktur entspiegelt. Die Mattstruktur kann beispielsweise eine Mottanaugenstruktur oder eine Subwellenlängenstruktur sein, also eine Struktur aus unregelmäßig oder regelmäßig angeordneten Elementen, deren laterale Abmessung kleiner als die Wellenlänge des sichtbaren Lichts ist.

Gemäß einer bevorzugten Ausführungsform ist vorgesehen, dass die lichtbrechende Struktur mindestens teilweise mit einem Lack bedeckt ist, dessen Brechungsindex größer oder kleiner als der Brechungsindex des Prägelacks ist. Dies hat den besonderen Vorteil, dass die lichtbrechende Struktur nicht durch einen Fälscher abgeformt werden kann. Außerdem wird verhindert, dass sich Schmutz in den freiliegenden Strukturen anlagert und dadurch deren optische Wirkung beeinträchtigt.

Gemäß einer weiteren bevorzugten Ausführungsform ist vorgesehen, dass die Farbschicht eine lasierende Farbschicht, eine Farbschicht aus einem Bindemittel und darin eingebetteten Aluminium-Pigmenten und gegebenenfalls weiteren Farbpigmenten, eine Farbe mit Farbkipppigmenten, wie sie beispielsweise aus EP 0 227 423 B1 bekannt ist, eine metallisch beschichtete Nanostrukturprägung oder ein farbiger Prägelack ist. Eine Farbschicht aus einem Bindemittel und darin eingebetteten Aluminium-Pigmenten wird auch als "Supersilber" bezeichnet, da sie einen silbernen Farbton zeigt. Entsprechende Aluminium-Pigmente sind beispielsweise in Form dünner Blättchen ausgestaltet, die deshalb auch als "leafing-Pigmente" bezeichnet werden.

Bei Verwendung von Farbe mit absinkenden leafing-Pigmenten ist keine zusätzliche teilreflektierende Beschichtung erforderlich. Bei Verwendung einer metallisch beschichtete Nanostrukturprägung ist keine zusätzliche teilreflektierende Beschichtung erforderlich. Wenn der Prägelack eingefärbt ist, ist optional keine separate Prägeschicht erforderlich.

Gemäß einer weiteren besonders bevorzugten Ausführungsform ist vorgesehen, dass die Farbschicht aus verschiedenen Farben zusammengesetzt ist, die nebeneinander angeordnet sind und bei einem Kippen oder Drehen des Substrats oder einer Änderung des Betrachtungswinkels auf das Substrat einen Farbverlauf verbunden mit einem Laufeffekt zeigt. Ein derartiger Farbverlauf mit Laufeffekt zeigt beispielsweise beim Kippen des Substrats je nach Kippwinkel verschiedene Farben. Besonders bevorzugt ist unter jedem einzelnen Element der lichtbrechenden Struktur mindestens eine bestimmte Farbe angeordnet. Beispielsweise ist einem oder mehreren Prismen die Farbe Rot, an der einen Seite daran angrenzenden Prismen die Farbe Gelb und an der anderen Seite daran angrenzenden Prismen die Farbe Grün zugeordnet. Dabei sind die Neigungswinkel der Prismen, denen dieselbe Farbe zugeordnet ist, jeweils gleich, und Prismen, welche mit unterschiedlichen Farben unterlegt sind, weisen unterschiedliche Neigungswinkel auf. Die Prismen über der Farbe Rot zeigen eine mittlere Steigung, die über der gelben Farbe beispielsweise eine größere Steigung und die über der grünen Farbe befindlichen Prismen entsprechend eine kleinere Steigung. Beim Kippen des Sicherheitselements sieht ein Betrachter also einen hellen Balken über das Sicherheitsmerkmal hinweg laufen, der durch seine Helligkeit die Wahrnehmung des Betrachters dominiert, wobei dieser gleichzeitig die den jeweils hell aufleuchtenden Prismen unterlegte Farbe sieht. Insgesamt erkennt der Betrachter also einen hellen Streifen über das Merkmal laufen, wobei der helle Streifen gleichzeitig den Farbwechsel von Gelb über Rot nach Grün wiedergibt. Bei einer größeren Anzahl von nebeneinander angeordneten verschiedenen Farben und ihnen zugeordneten Prismensteigungen können auch wesentlich feinere Farbabstufungen bzw. Farbwechsel erzeugt werden.

Bei einer Farbschicht aus einer metallisch beschichteten Nanostrukturprägung kann ein Farbverlauf durch sich in Längsrichtung, also in Richtung parallel zur Oberfläche des Substrats, ändernde Strukturparameter erzeugt werden. Beispielsweise ändert sich in Längsrichtung mindestens einer der folgenden Parameter der einzelnen Strukturen der Nanostrukturprägung: Höhe, Breite, Abstand voneinander, Form.

Die Farbschicht wird bevorzugt mit einem Druckverfahren aufgebracht, beispielsweise mit einem Tiefdruckverfahren oder einem Flexodruckverfahren.

Anstatt der Farbschicht kann der Prägelack selbst mehrfarbig ausgeführt sein. Dieser wird beispielsweise mit einem sogenannten "WetFlex"-Druckverfahren auf das Substrat bzw. die Kunststofffolie aufgebracht. Hierbei wird eine Zentralzylindermaschine mit einer Vorrichtung zur Erzeugung von UV-Strahlen oder Elektronenstrahlen nach dem letzten Druckwerk verwendet. Das Substrat umschlingt einen großen zentralen Zylinder und die einzelnen Druckwerke bedrucken das Substrat nacheinander mit den verschiedenfarbigen Prägelacken. Anschließend wird die lichtbrechende Struktur in die aufgetragenen Schichten geprägt und die aufgetragenen Schichten durch den UV- oder Elektronenstrahl gehärtet. Anstelle des "WetFlex"-Druckverfahrens können die verschiedenfarbigen Prägelacke auch mit einem Tintenstrahldrucker auf das Substrat aufgedruckt werden, die lichtbrechende Struktur in die aufgedruckten Schichten geprägt werden und anschließend die Härtung der Schichten erfolgen. Anstelle der beiden genannten Druckverfahren können auch physikalisch trocknende UV-Systeme (lösemittelbasiert oder wässrig) verwendet werden. Diese werden sukzessive auf das Substrat gedruckt und physikalisch getrocknet. Dann erfolgt die Prägung und die UV-Vernetzung.

Gemäß einer weiteren besonders bevorzugten Ausführungsform ist vorgesehen, dass die mindestens teilreflektierende Schicht spiegelnd reflektierend ist. Einfallendes Licht wird also nicht diffus, sondern gemäß dem Grundsatz Einfallswinkel gleich Ausfallswinkel und damit spiegelnd reflektiert. Dadurch wird gewährleistet, dass die insgesamt resultierende Ablenkung des von einer Lichtquelle stammenden und zu einem Betrachter gelenkten Lichts hauptsächlich durch die lokal variierenden Prismen definiert wird, die wie oben beschrieben mit etwaig vorhandenen Farbverläufen im Register angeordnet sein können. Bei diffus streuender Reflektion würde dem gewünschten Effekt durch gezielte Lichtbrechung an den Prismen ein zufälliger Effekt durch diffuse Strahlablenkung überlagert, wodurch der eigentlich beabsichtigte Effekt verringert oder gar völlig unterdrückt wird. Die spiegelnd reflektierende Schicht bewirkt in Kombination mit einer lasierenden Farbe, dass ein Betrachter die optische variablen Effekte besonders brillant wahrnehmen kann: einerseits, weil das Licht die lasierende Farbschicht zweimal durchläuft und die Farbe dabei spektral gut gefiltert wird, andererseits, weil kein Licht durch die Reflexion in den dem Betrachter abgewandten Halbraum unter dem Sicherheitsmerkmal verlorengeht.

Besonders bevorzugt besteht die mindestens teilreflektierende Schicht dabei aus einer aufgedampften Metallschicht oder einer aufgedruckten metallischen Farbe. Besonders geeignet ist dabei eine lasierende Farbe mit sogenannten leafing-Pigmenten, die sich nach dem Druck der Farbe an der unteren Grenzfläche ansammeln, so dass lasierende Farbe und reflektierende Schicht praktisch in einem Arbeitsgang hergestellt werden können. Dabei ist es von Vorteil, wenn der Bedruckstoff eben ist, so dass sich die aus den leafing-Pigmenten bestehende Reflexionsschicht wie ein möglichst ebener Spiegel ausbilden kann. Alternativ oder zusätzlich kann die mindestens teilreflektierende Schicht auch aus einer mehrschichtigen Struktur bestehen, die für einen Betrachter in Auflicht reflektierend und in Durchlicht farbig erscheint, beispielsweise in Auflicht goldfarben und in Durchlicht Blau, wie sie beispielsweise aus WO 2011/064162 A2 oder DE 10 2009 058 243 A1 bekannt ist. Die mehrschichtige Struktur kann auch in Form von Pigmenten vorliegen, die in Reflexion eine andere Farbe haben als in Transmission. Die Metallschicht kann dann weggelassen werden oder ist ausreichend dünn. Es handelt sich hierbei um einen sogenannten trans-Colourshift.

Die mindestens teilreflektierende Schicht kann vollflächig unterhalb der Farbschicht ausgebildet sein, die Farbschicht also vollflächig bedecken, oder Aussparungen aufweisen. Die Aussparungen können jeweils eine Information für sich bilden oder rasterartig angeordnet sein, wobei die Gesamtheit der Rasterelemente eine Information bildet.

Mindestens teilreflektierend bedeutet hierbei, dass die Schicht mindestens einen Teil des auf sie auftreffenden Lichts reflektiert und den restlichen Teil durch sie hindurchtreten lässt, oder dass die Schicht das auf sie auftreffende Licht vollständig reflektiert.

Das erfindungsgemäße Sicherheitselement kann bereichsweise mit einer sogenannten Lumogen-Farbe überdruckt werden, die Flakes enthält. Hierdurch können nebeneinander angeordnete reflektierende und lichtbrechende Abschnitte oder Bereiche erzeugt werden.

Alternativ kann das erfindungsgemäße Sicherheitselement hergestellt werden, indem bei einer UV-Prägung die Prozesse auf zwei Folien ausgeführt wird. Auf der ersten Folie erfolgt die gewünschte Prägung, auf der zweiten Folie wird releasefähig UV-Lack gedruckt. Dann wird dieser UV-Lack metallisiert und die Buntfarben als Resistlack gedruckt. Dann wird geätzt. Dann wird dieser Aufbau auf die Rückseite der Folie mit den Prägestrukturen aufkaschiert und trenngewickelt. Vorteil dieses Aufbaus ist, dass eine exakte Passerung zwischen Buntfarbe (kann gezielt lokal auch farbloser Resist sein) und Reflektor erzielt wird.

Alternativ kann das erfindungsgemäße Sicherheitselement vollständig drucktechnisch hergestellt werden. Gemäß einer ersten Variante wird hierbei ein Farbverlauf mit Offset auf dieselbe Seite des Substrats gedruckt und bei transparenten Substraten auch auf die gegenüberliegende Seite des Substrats. Anschließend wird ein farbloses prägbares Material gedruckt und es erfolgt eine Prägung und UV Härtung. Gemäß einer zweiten Variante wird ein Farbverlauf mit Offset auf dieselbe Seite des Substrats gedruckt und bei transparenten Substraten auch auf die gegenüberliegende Seite des Substrats. Anschließend wird ein farbloses thermoplastisches Material gedruckt und es erfolgt eine Prägung mittels Stahlstich. Gemäß einer dritten Variante kann auch eine Kombination mit einer gedruckten Farbe erfolgen, die aufgrund von Metallflakes reflektierend ist.

Das Substrat besteht besonders bevorzugt aus mindestens einer Kunststofffolie, wobei zum Beispiel PET (Polyethylenterephthalat), BOPP oder andere Materialien zum Einsatz kommen können.

Der Prägelack ist besonders bevorzugt ein strahlenhärtender Lack, der nach dem Einbringen der lichtbrechenden Struktur durch Bestrahlung beispielsweise mit elektromagnetischer Strahlung im ultravioletten Wellenlängenbereich oder durch einen Elektronenstrahl aushärtet. Alternativ kann ein thermoplastischer Prägelack eingesetzt werden, der unter der Einwirkung von Druck und Temperatur die Oberflächenstrukturierung eines Prägewerkzeugs annehmen kann.

Der Prägelack und die Farbschicht sowie bei den Varianten aus den Ansprüchen 1 und 2 auch das Substrat müssen transluzent ausgebildet sein, da ansonsten ein Betrachter, der auf die Vorderseite des Sicherheitselements blickt, nicht durch den Prägelack und die Farbschicht sowie gegebenenfalls das Substrat hindurch die reflektierende Schicht erkennen kann und die reflektierende Schicht somit nicht optisch wirksam werden kann. Transluzent im Sinne dieser Erfindung bedeutet, dass ein Objekt, wie der Prägelack, die Farbschicht sowie gegebenenfalls das Substrat, auftreffendes Licht in einem bestimmten Anteil hindurchtreten lässt. Trifft Licht auf eine Seite des Objekts auf, wird ein bestimmter Anteil des Lichtes bis zu der anderen Seite des Objekts hindurch gelassen und tritt dort wieder aus. Je größer der prozentuale Anteil des hindurchtretenden Lichtes bezogen auf das auftreffende Licht ist, desto transluzenter ist das Objekt. Liegt der prozentuale Anteil bei mindestens 90 %, d.h. lässt das Objekt das auftreffende Licht wie bei einem Fenster nahezu ungeschwächt hindurchtreten, wird das Objekt als transparent bezeichnet. Ein Objekt hingegen, das weniger als 10 % und bevorzugt etwa 0 % des auftreffenden Lichtes hindurchtreten lässt, d.h. bei dem der Anteil des hindurchtretenden Lichtes bezogen auf das auftreffende Licht gering oder nahe oder gleich Null ist, wird als opak oder als nicht lichtdurchlässig bezeichnet.

Wertdokumente, für die ein erfindungsgemäßes Sicherheitselement verwendet werden kann, sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, sowie Karten, wie beispielsweise Kredit- oder Debitkarten, deren Kartenkörper mindestens eine Lage eines Sicherheitspapiers aufweist, und auch Produktsicherungselemente, wie Etiketten, Siegel, Verpackungen, Faltschachteln, Beipackzettel und dergleichen. Die vereinfachte Benennung Wertdokument schließt alle oben genannten Materialien, Dokumente und Produktsicherungsmittel ein.

Die Begriffe "Vorderseite" oder "Rückseite" des Substrats sind relative Begriffe, die auch als "die eine" und "die gegenüberliegende" Seite bezeichnet werden können und die den überwiegenden Anteil der Gesamtoberfläche des Substrats bilden. Ausdrücklich nicht umfasst mit diesen Begriffen sind die Seitenflächen eines Substrats, die bei einer Dicke eines Substrats, die bei Kartenkörpern nur etwa einen Millimeter oder bei Banknoten nur Bruchteile eines Millimeters beträgt, verschwindend gering sind und üblicherweise nicht mit Sicherheitselementen oder Beschichtungen versehen werden bzw. werden können.

Es versteht sich, dass die vorstehend genannten und die nachfolgend noch zu erläuternden Merkmale nicht nur in den angegebenen Kombinationen, sondern auch in anderen Kombinationen einsetzbar sind, ohne den Rahmen der vorliegenden Erfindung zu verlassen, soweit dies von dem Schutzumfang der Ansprüche erfasst ist.

Anhand der nachfolgenden Ausführungsbeispiele und der ergänzenden Figuren werden die Vorteile der Erfindung erläutert. Die Ausführungsbeispiele stellen bevorzugte Ausführungsformen dar, auf die jedoch die Erfindung in keinerlei Weise beschränkt sein soll. Die beschriebenen Einzelmerkmale und nachfolgend beschriebenen Ausführungsbeispiele sind für sich genommen erfinderisch, aber auch in Kombination erfinderisch. Des Weiteren sind die Darstellungen in den Figuren des besseren Verständnisses wegen stark schematisiert und spiegeln nicht die realen Gegebenheiten wider. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Ausführungsbeispielen beschriebenen Ausführungsformen der besseren Verständlichkeit wegen auf die wesentlichen Kerninformationen reduziert. Bei der praktischen Umsetzung können wesentlich komplexere Muster oder Bilder zur Anwendung kommen.

Im Einzelnen zeigen schematisch jeweils in Seitenansicht:
- Fig. 1: ein erfindungsgemäßes Sicherheitselement gemäß einem ersten Ausführungsbeispiel, das die erste Möglichkeit zeigt,
- Fig. 2: ein erfindungsgemäßes Sicherheitselement gemäß einem zweiten Ausführungsbeispiel, das die zweite Möglichkeit zeigt,
- Fig. 3: ein erfindungsgemäßes Sicherheitselement gemäß einem dritten Ausführungsbeispiel, das die dritte Möglichkeit zeigt,
- Fig. 4: einen Ausschnitt der Prägestruktur aus Fig. 1 bis Fig. 3 mit einer stufenförmigen Mattstruktur.

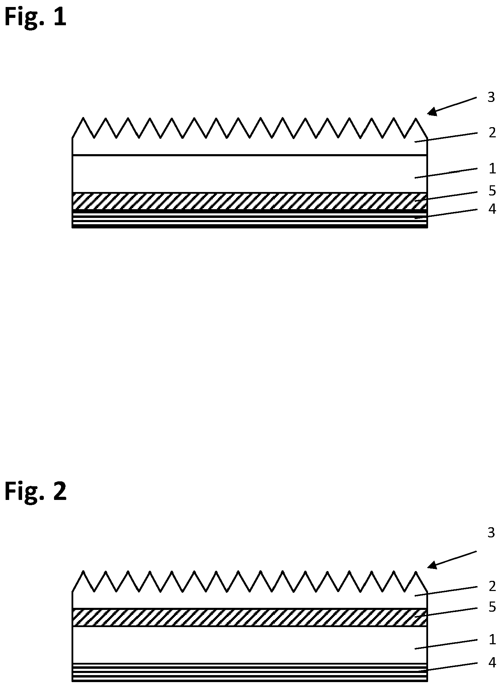

Fig. 1 zeigt schematisch in Seitenansicht ein Substrat 1, auf dessen Vorderseite ein Prägelack 2 aufgebracht bzw. angeordnet ist. In die Vorderseite des Prägelacks 2 ist eine lichtbrechende Struktur 3 in Form von nebeneinander angeordneten Mikroprismen eingebracht, beispielsweise eingeprägt. Auf der Rückseite des Substrats 1 ist eine Farbschicht 5 und auf dieser wiederum eine reflektierende Schicht 4 aufgebracht bzw. angeordnet.

Fig. 2 zeigt schematisch in Seitenansicht das Substrat 1, auf dessen Vorderseite die Farbschicht 5 und auf dieser wiederum der Prägelack 2 mit der lichtbrechenden Struktur 3 angeordnet ist. Auf der Rückseite des Substrats 1 ist die reflektierende Schicht 4 angeordnet.

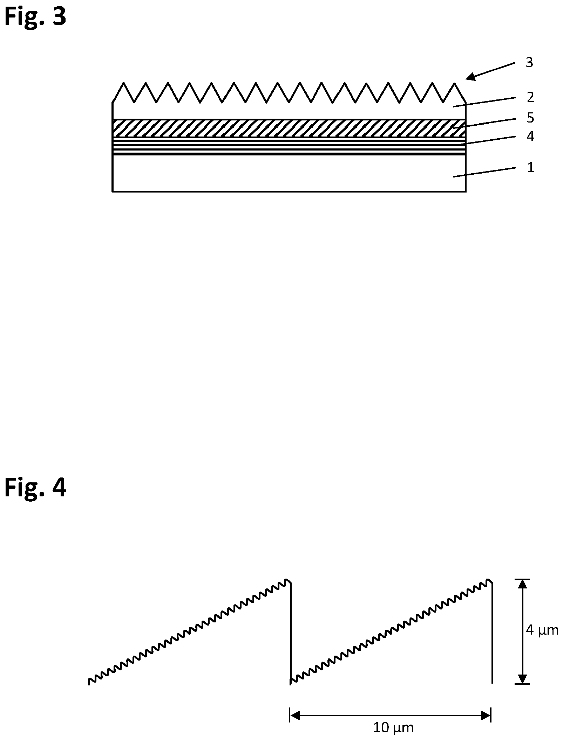

Fig. 3 zeigt schematisch in Seitenansicht das Substrat 1, auf dessen Vorderseite die reflektierende Schicht 4, auf dieser wiederum die Farbschicht 5 und auf dieser wiederum der Prägelack 2 mit der lichtbrechenden Struktur 3 angeordnet ist.

Die Flanken der einzelnen Prismen der lichtbrechenden Struktur 3 können jeweils glatt ausgeführt sein. Einige oder alle dieser Flanken können jedoch auch Mattstrukturen aufweisen, wie sie beispielhaft in Fig. 4 gezeigt werden. Fig. 4 zeigt einen Ausschnitt einer sägezahnartigen Prägestruktur mit zwei "Sägezähnen". In diesem Ausführungsbeispiel ist in die Oberfläche der Prägestruktur eine Mattstruktur aus Subwellenlängen- bzw. Nanostrukturen eingebracht. Jede der einzelnen Prägestrukturen hat eine Breite von etwa 10 µm und eine Höhe von 4 µm, wobei die Nanostruktur auf den schrägen Flanken angeordnet ist. Jede Nanostruktur einer Flanke besteht in Richtung der Steigung aus etwa 30 Zapfen oder Spiegeln, so dass die Nanostruktur eine Periode von etwa 300 nm aufweist. Die Tiefe der Nanostruktur beträgt etwa 250 nm.

Durch die kleinräumige Variation der Oberfläche des Materials durch die Subwellenlängen- bzw. Nanostruktur entsteht nach der Effektive-Medium-Theorie ein kontinuierlicher Brechungsindexübergang von Luft zum Brechungsindex des Prägelacks, wodurch eine Reflexion unterdrückt wird.

## Patentansprüche

1. Sicherheitselement für Sicherheitspapiere, Wertdokumente oder dergleichen, wobei das Sicherheitselement aus einem Substrat (1) mit einer Vorderseite und einer Rückseite besteht, wobei auf der Vorderseite des Substrats (1) ein Prägelack (2) mit einer dem Substrat (1) zugewendeten Rückseite und einer vom Substrat (1) abgewendeten Vorderseite angeordnet ist, wobei in die Vorderseite des Prägelacks (2) eine lichtbrechende Struktur (3) eingebracht ist, **dadurch gekennzeichnet, dass** auf der Rückseite des Substrats (1) eine mindestens teilreflektierende Schicht (4) angeordnet ist, wobei zwischen der Rückseite des Substrats (1) und der mindestens teilreflektierenden Schicht (4) eine Farbschicht (5) angeordnet ist.

2. Sicherheitselement für Sicherheitspapiere, Wertdokumente oder dergleichen, wobei das Sicherheitselement aus einem Substrat (1) mit einer Vorderseite und einer Rückseite besteht, wobei auf der Vorderseite des Substrats (1) ein Prägelack (2) mit einer dem Substrat (1) zugewendeten Rückseite und einer vom Substrat (1) abgewendeten Vorderseite angeordnet ist, wobei in die Vorderseite des Prägelacks (2) eine lichtbrechende Struktur (3) eingebracht ist, **dadurch gekennzeichnet, dass** zwischen der Vorderseite des Substrats (1) und dem Prägelack (2) eine Farbschicht (5) angeordnet ist, wobei auf der Rückseite des Substrats (1) eine mindestens teilreflektierende Schicht (4) angeordnet ist.

3. Sicherheitselement für Sicherheitspapiere, Wertdokumente oder dergleichen, wobei das Sicherheitselement aus einem Substrat (1) mit einer Vorderseite und einer Rückseite besteht, wobei auf der Vorderseite des Substrats (1) ein Prägelack (2) mit einer dem Substrat (1) zugewendeten Rückseite und einer vom Substrat (1) abgewendeten Vorderseite angeordnet ist, wobei in die Vorderseite des Prägelacks (2) eine lichtbrechende Struktur (3) eingebracht ist, **dadurch gekennzeichnet, dass** zwischen der Vorderseite des Substrats (1) und dem Prägelack (2) eine Farbschicht (5) angeordnet ist, wobei zwischen der Farbschicht (5) und der Vorderseite des Substrats (1) eine mindestens teilreflektierende Schicht (4) angeordnet ist.

4. Sicherheitselement nach einem der vorigen Ansprüche, **dadurch gekennzeichnet, dass** die lichtbrechende Struktur (3) aus Prismen, sägezahnartigen Strukturen oder Fresnellstrukturen besteht.

5. Sicherheitselement nach einem der vorigen Ansprüche, **dadurch gekennzeichnet, dass** in die lichtbrechende Struktur (3) mindestens teilweise eine Mattstruktur eingebracht ist.

6. Sicherheitselement nach Anspruch 5, **dadurch gekennzeichnet, dass** die Mattstruktur eine Mottanaugenstruktur oder eine Subwellenlängenstruktur ist.

7. Sicherheitselement nach einem der vorigen Ansprüche, **dadurch gekennzeichnet, dass** in die lichtbrechende Struktur (3) mindestens teilweise mit einem Lack bedeckt ist, dessen Brechungsindex größer oder kleiner als der Brechungsindex des Prägelacks ist.

8. Sicherheitselement nach einem der vorigen Ansprüche, **dadurch gekennzeichnet, dass** die Farbschicht (5) eine lasierende Farbschicht, eine Farbschicht aus einem Bindemittel und darin eingebetteten Aluminium Pigmenten, eine Farbe mit Farbkipppigmenten, eine metallisch beschichtete Nanostrukturprägung oder ein farbiger Prägelack ist.

9. Sicherheitselement nach einem der vorigen Ansprüche, **dadurch gekennzeichnet, dass** die Farbschicht (5) aus verschiedenen Farben zusammengesetzt ist und bei einem Kippen oder Drehen des Substrats (1) oder einer Änderung des Betrachtungswinkels auf das Substrat (1) einen Farbverlauf verbunden mit einem Laufeffekt zeigt.

10. Sicherheitselement nach einem der vorigen Ansprüche, **dadurch gekennzeichnet, dass** die mindestens teilreflektierende Schicht (4) spiegelnd reflektierend ist.

11. Sicherheitselement nach einem der vorigen Ansprüche, **dadurch gekennzeichnet, dass** die mindestens teilreflektierende Schicht (4) aus einer Metallschicht oder einer metallischen Farbe besteht.

12. Sicherheitselement nach einem der vorigen Ansprüche, **dadurch gekennzeichnet, dass** die reflektierende Schicht (4) aus einer mehrschichtigen Struktur besteht, die für einen Betrachter in Auflicht reflektierend und in Durchlicht farbig erscheint.
